# EUROPÄISCHE PATENTSCHRIFT

(11) **EP 1 321 355 B1**
(45) Veröffentlichungstag und Bekanntmachung des Hinweises auf die Patenterteilung: **12.07.2006**
(21) Anmeldenummer: 02026615.1
(22) Anmeldetag: 29.11.2002
(51) Int. Cl.: B62D 25/06

(54) **Verfahren zur Verbindung von Karosseriebauteilen mit einer Verbindungsnaht**
Method for connecting vehicle body parts with a weld line
Procédé de relier des parties de carrosseries de véhicule avec une ligne de soudure

(30) Priorität: 21.12.2001 DE 10163391
(43) Veröffentlichungstag der Anmeldung: 25.06.2003
(73) Patentinhaber: AUDI AG, 85045 Ingolstadt (DE)
(72) Erfinder: Dorner, Reinhard, 85077 Manching (DE); Nagler, Christian, 85095 Denkendorf/Schönbrunn (DE); Kroneck, Alfred, 85051 Ingolstadt (DE)
(74) Vertreter: Geissler, Manfred

(56) Entgegenhaltungen:
- EP-A- 0 919 318
- US-A- 4 538 044
- US-A- 5 380 978

## Beschreibung

Die Erfindung betrifft ein Verfahren zur Verbindung eines ersten Karosseriebauteils und eines zweiten Karosseriebauteils mit einer Verbindungsnaht an einer Nahtfuge nach dem Oberbegriff des Anspruchs 1. Ein derartiges Verfahren wird in der US-A-5380978 beschrieben.

Mit einem weiteren Verfahren aus der DE 195 23 005 A1 ist es bekannt, im Übergang vom Dach in die Seitenteile einer Fahrzeugkarosserie jeweils eine Regenrinne auszubilden, wobei im Regenrinnenbereich einander überlappende Bleche vom Dachteil und den Seitenwandteilen von oben her durch Laserschweißen verbunden werden. Konkret wird durch eine von einem Dachteil abgestellte Seitenwange und durch einen an der zugehörigen Seitenwand angeformten Flansch eine Kehle gebildet, die mittels eines Laserstrahls verschweißt wird. Gegebenenfalls können dazu in einem Laserlötverfahren Zusatzdrähte verwendet werden. Damit soll eine stabile Verbindung mit einer Verbindungsnaht, die keinerlei Nacharbeit erfordert, erreicht werden.

Dies ist jedoch nur dann zu erreichen, wenn vor der Verbindung die angrenzenden Bauteile genau lagerichtig mit einer Nahtfuge mit geringem Fugenmaß aneinandergeführt werden. Für eine Verbindung durch Laserlöten ist für eine optimale und prozesssichere Verbindungsnaht ein Fugenmaß von 0 mm bis maximal +0,2 mm zu gewährleisten, wobei eine Nullfuge anzustreben ist. Zudem sind für eine gute Anmutung eines solchen Übergangs gleichmäßige und genaue Kanten- und Sickenverläufe zu gewährleisten, so dass vor der Verbindung eine entsprechend genaue Relativlage der Bauteile sicherzustellen ist. Diese Bedingungen sind aufgrund der Fertigungstoleranzen der hier verwendeten Blechbauteite nicht immer einzuhalten, so dass die Verbindungsergebnisse teilweise unbefriedigend sein können.

In der DE 37 20 344 A1 ist ein Herstellverfahren für Kraftfahrzeug-Rohkarossen beschrieben, bei dem zunächst ein Unterbau zusammengesetzt und dann Seitenteile an den Unterbau angesetzt und festgelegt werden. Dabei ist auf die Problematik hingewiesen, dass die Querabstände zwischen den Seitenteilen insbesondere im Bereich von oberen Pfostenenden aufgrund von Form- und Fügetoleranzen variieren können. Maßabweichungen sollen hier dadurch verhindert werden, dass ein separater Dachrahmen maßgenau unter Verwendung einer Lehre hergestellt wird, der dann in den Unterbau eingesetzt und darin festgelegt wird. Maßabweichungen an Verbindungsstellen, die durch Toleranzen des später auf den Dachrahmen aufgesetzten flächigen Dachteils bedingt sind, können damit nicht behoben werden.

Aus DE 198 06 963 A1 und DE 33 46 523 C2 sind zudem Verfahren und Vorrichtungen zum Zuführen, Spannen und Bearbeiten insbesondere zum Geometrieschweißen von Bauteilen zur automatisierten Herstellung von Rohkarossen in einer oder mehreren Bearbeitungsstationen unter Verwendung von Robotern bekannt. Dabei ist es aus DE 33 46 523 C2 bekannt zum Erreichen von Nahtfugen geringer Fugenweite ein Dachteil mit nach unten abgebogenen seitlichen Dachteil-Anschlussflanschen zwischen gegenüberliegende Dachseitenholme unter Vorspannung einzuklemmen. Damit sind jedoch toleranzabhängige Verbiegungen verbunden, die ihrerseits wiederum zu nicht hinnehmbaren Maßabweichungen führen bzw. große Eigenspannungen im Bauteil bewirken können.

Aufgabe der Erfindung ist es ein gattungsgemäßes Verfahren zur Verbindung von Karosseriebauteilen, insbesondere von Dachseitenholmen mit einem Dachteil so weiterzubilden, dass eine stabile Verbindung und eine genaue vorgegebene Lage einer Verbindungsnaht erreicht werden.

Diese Aufgabe wird mit den Merkmalen des Anspruchs 1 gelöst.

Gemäß Anspruch 1 sind die Karosseriebauteile im Bereich der Nahtfuge an Spannstellen mittels Stell- und Spanneinheiten gehalten, die in Abhängigkeit von messtechnisch erfassten, dortigen Bauteilkonturen für eine gegenseitige Bauteilkonturausrichtung und Bauteilkonturanpassung zur weitgehenden Eliminierung von Bauteiltoleranzen im Nahtfugenbereich geregelt verstellbar sind. Nach einer solchen Bauteilkonturausrichtung und Bauteilkonturanpassung werden die Bauteile mit einer Nahtfuge mit geringem Fugenmaß insbesondere als Nullfuge gegeneinander ausgerichtet werden. Anschließend wird die Verbindungsnaht angebracht.

Durch ein solches geregeltes Ausrichten und Anpassen der die Nahtfuge bildenden Bauteilkonturen mittels Stell- und Spanneinheiten unmittelbar vor und unter Beibehaltung der Stellpositionen der Stell- und Spanneinheiten während der Durchführung der Verbindung können Toleranzen im Nahtfugenbereich weitestgehend eliminiert werden, so dass optimal stabile und lagerichtig genaue Verbindungen herstellbar sind.

Vorteilhafte Weiterbildungen des Verfahrens nach Anspruch 1 sind in den abhängigen Ansprüchen 2 bis 8 enthalten.

Anhand einer Zeichnung wird die Erfindung näher erläutert.

Es zeigen:
- Fig. 1: eine schematische Darstellung einer Laserlötstation zum Anbringen einer Verbindungsnaht zwischen einem Seitenwandteil und einem Dachteil,
- Fig. 2: eine schematische Darstellung einer Stell- und Spanneinheit für das Seitenwandteil,
- Fig. 3: eine schematische Darstellung einer Steil- und Spanneinheit für das Dachteil, und
- Fig. 4: eine schematische Schnittdarstellung in Fahrzeugquerrichtung im Bereich des Dachteils.

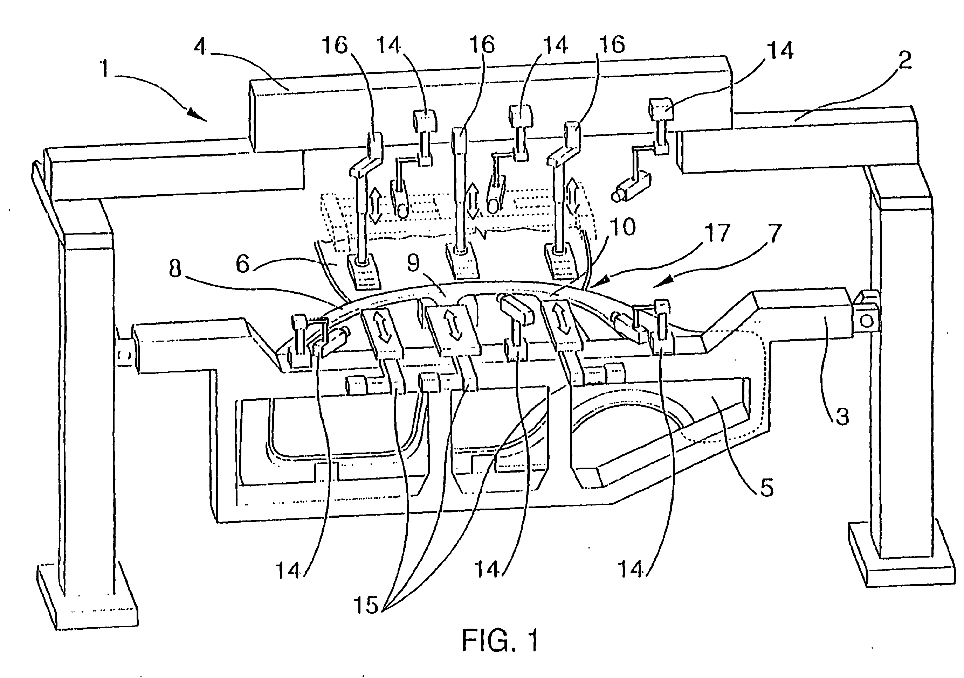

In Fig. 1 ist eine Laserlötstation 1 schematisch dargestellt. Die Basis der Laserlötstation 1 ist ein als Stahlbauportal ausgeführter Laserlötstation-Aufbau 2. An diesem ist seitlich ein Seitenwandträger 3 und an der Oberseite ein Dachteilträger 4 angeordnet. An dem Seitenwandträger 3 ist lagerichtig und ortsfest ein Seitenwandteil 5 anbringbar, an dem Dachteilträger 4 ist lagerichtig und ortsfest ein Dachteil 6 anbringbar. Das Seitenwandteil 5 besitzt einen Dachseitenholm 7 und im Bereich einer A-Säule 8, einer B-Säule 9 und einer C-Säule 10 jeweils eine Spannstelle 11 im Bereich des Dachseitenholms 7. Am Dachteil 6 ist seitlich in Fahrzeuglängsrichtung jeweils ein Dachteil-Anschlussflansch 12 ausgebildet. Im Bereich der A-Säule 8, der B-Säule 9 und der C-Säule 10 sind im Dachteil-Anschlussflansch 12 Spannstellen 13 ausgebildet. Sowohl am Dachteilträger 4 als auch am Seitenwandträger 3 sind Kameras 14 zur Aufnahme der jeweiligen Bauteilkontur angeordnet. Am Seitenwandträger 3 sind drei Seitenwand-Stell- und Spanneinheiten 15 angeordnet, die an den Spannstellen 11 des Seitenwandteiles 5 im Bereich der A-Säule 8, der B-Säule 9 und der C-Säule 10 angreifen. Am Dachteilträger 4 sind drei Dachteil-Stell-und Spanneinheiten 16 angeordnet, die an den Spannstellen 13 des Dachteil-Anschlussflansches 12 angreifen. Der Seitenwandträger 3 und der Dachteilträger 4 sind mit den daran angeordneten Bauteilen, dem Seitenwandteil 5 und dem Dachteil 6, so gegeneinander verfahrbar, dass eine Dachfuge 17 bildbar ist. Das zweite Seitenwandteil des Kraftfahrzeuges, die Halteelemente des Dachteilträgers 4, mit denen das Dachteil 6 am Dachteilträger 4 gehalten ist, und ein Roboter mit einem Laserlötkopf zum Anbringen einer Verbindungsnaht zwischen dem Seitenwandteil 5 und dem Dachteil 6 sind aus Übersichtlichkeitsgründen nicht mit dargestellt.

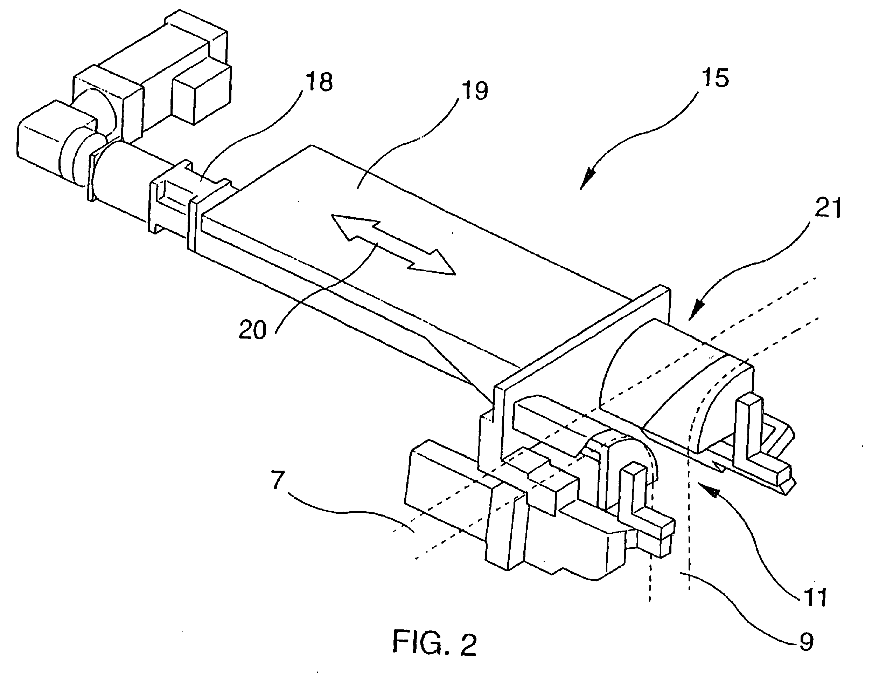

In Fig. 2 ist schematisch die Seitenwand-Stell- und Spanneinheit 15 dargestellt. Mittels eines Kugelspindelantriebs 18 ist ein Schlitten 19 in Fahrzeugquerrichtung 20 verfahrbar. Mit dem Kugelspindelantrieb 18 ist eine Positionsgenauigkeit von ±0,02 mm erreichbar. An dem Schlitten 19 ist eine Spannvorrichtung 21 angeordnet, die an der Spannstelle 11 des Seitenwandteiles 5 angreift. Beispielhaft ist in Fig. 2 die B-Säule 9 des Seitenwandteiles 5 im Bereich des Dachseitenholmes 7 strichliert dargestellt.

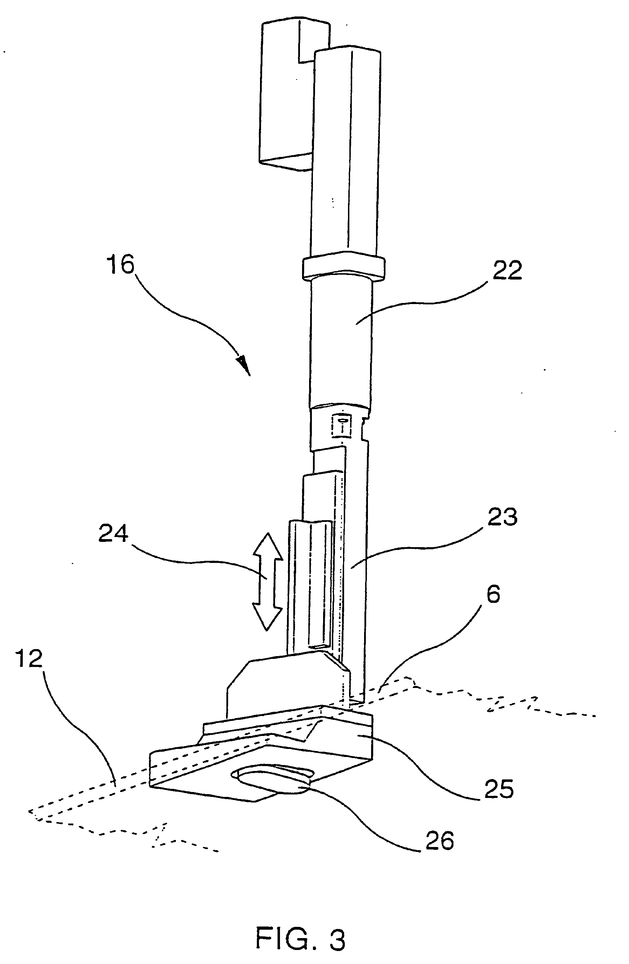

In Fig. 3 ist die Dachteil-Stell- und Spanneinheit 16 schematisch dargestellt. Mittels eines Kugelspindelantriebes 22 ist ein Schlitten 23 in Fahrzeughochrichtung 24 verfahrbar. Mit dem Kugelspindelantrieb 22 ist eine Positionsgenauigkeit von plus/minus 0,02 mm erreichbar. An dem Schlitten ist ein Konturstück 25 mit integriertem Saugteller 26 zum Halten des Dachteils 6 angeordnet. Das Konturstück 25 ist dem Bereich des Dachteiles 6 in der Form dementsprechend angepasst. Strichliert ist ein Ausschnitt des Dachteiles dargestellt.

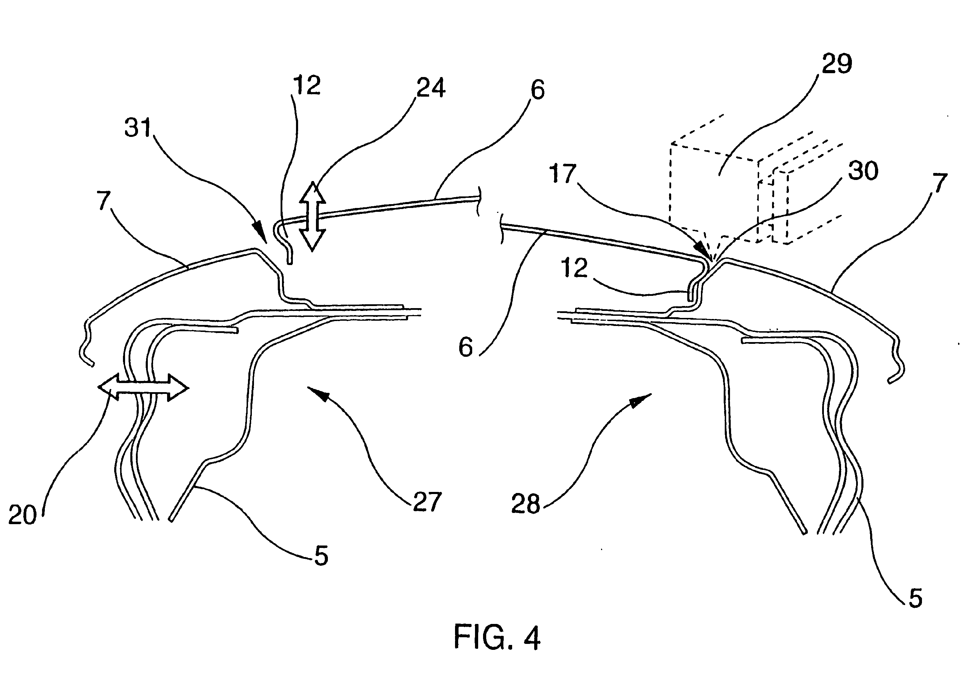

In Fig. 4 ist schematisch ein Schnitt in Fahrzeugquerrichtung im Bereich des Dachteils 6 dargestellt. In der linken Hälfte von Fig. 4 ist das Dachteil 6 noch abgehoben gegenüber dem Seitenwandteil 3 dargestellt. Dies stellt die Mess- und Ausrichtposition 27 dar. Mit den Doppelpfeilen ist ein potentielles geregeltes Ausrichten und Anpassen der Nahtfuge, die als Dachfuge 17 ausgebildet ist, in Fahrzeugquerrichtung 20 und in Fahrzeughochrichtung 24 eingezeichnet. In der rechten Hälfte von Fig. 4 sind das Dachteil 6 und das Seitenwandteil 5 in Ihrer Laserlötposition 28 dargestellt. Mit einem strichliert dargestellten Laserlötkopf 29 wird entlang der Dachfuge 17 eine Laserlötnaht 30 zur Verbindung des Dachteiles 6 mit dem Seitenwandteil 5 eingebracht.

Das an dem Dachteilträger 4 angeordnete Dachteil 6 und die Seitenwandteile 5, die an den Seitenwandträgem 3 gehalten sind, werden in dem Laserlötstation-Aufbau 2 so positioniert, dass sie der Mess- und Ausrichtposition 27 entsprechen. Das heißt, dass im Bereich der Dachfuge 17, die zwischen dem Dachteil-Anschlussflansch 12 des Dachteiles 6 und dem Dachseitenholm 7 des Seitenwandteiles 5 gebildet ist, ein Mess- und Richtspalt 31 in der Größenordnung von etwa 5 mm bis 10 mm erhalten wird. Mittels der Kameras 14 werden die relevanten Bauteilkonturen des Dachteiles 6 und des Seitenwandteiles 5 erfasst, wobei erfasste Messdaten als Istwerte einer hier nicht dargestellten Mess- und Regeleinrichtung zugeführt werden. Dort werden diese Istwerte mit Kontursollwerten verglichen und Korrekturmaße ermittelt. Nach Umwandlung der Korrekturmaße in Stellwerte für die Seitenwand-Stell- und Spanneinheit 15 und die Dachteil-Stell- und Spanneinheit 16 , werden diese dort für eine geregelte Eliminierung von Bauteiltoleranzen im Bereich der Dachfuge 17 verwendet. Das heißt, die an den Spannstellen 13 des Dachteiles 6 und an den Spannstellen 11 des Seitenwandteiles 5 angreifenden Stell- und Spanneinheiten 15 und 16 richten das Dachteil 6 bzw. das Seitenwandteil 5 in Fahrzeugquerrichtung 20 und in Fahrzeughochrichtung 24 aus und passen die Bauteilkontur für eine optimale Parallelität an. Nach Abschluss der Ausrichtungen und Anpassungen wird das Dachteil 6 zwischen die beiden Dachseitenholme 7 des Seitenwandteiles 5 passgenau mit einer Nullfuge zugestellt, das heißt dass damit die Dachfuge 17 für den Verbindungsvorgang hergestellt ist. Bei dem Vorgang der Zustellung werden die Stellpositionen der Stell- und Spanneinheiten 15 und 16 beibehalten. So können Toleranzen im Dachfugenbereich weitestgehend eliminiert werden, so dass optimal stabile und lagerichtig genaue Verbindungen herstellbar sind. Mit dem Laserlötkopf 29 ist jetzt die Laserlötnaht 30 entlang der Dachfuge 17 herstellbar.

## Patentansprüche

1. Verfahren zur Verbindung eines ersten Karosseriebauteils und eines zweiten Karosseriebauteils mit einer Verbindungsnaht an einer Nahtfuge (17), mit einer Mess- und Regeleinrichtung zur Erfassung bauteilspezifischer Daten, wobei die messtechnische Erfassung der Geometrie der Bauteilkonturen durch optische oder Laser- oder taktile Messsensoren in der Art von Kameras (14) oder Sensoren erfolgt, wobei das erste Karosseriebauteil durch zwei voneinander beabstandete und jeweils einen Dachseitenholm (7) aufweisende Seitenwandteile (5) einer Rohkarosse gebildet ist, und wobei das zweite Karosseriebauteil jeweils ein Dachteil-Anschlussflansch (12) eines flächigen Dachteils (6) ist
**dadurch gekennzeichnet,**
**dass** die Seitenwandteile (5) einer Laserlötstation (1) zugeführt werden und lagerichtig an einem Seitenwandträger (3) in einem Laserlötstation-Aufbau (2) verriegelt werden, wobei am Seitenwandträger (3) versetzt zueinander angeordnete Seitenwand-Stell- und Spanneinheiten (15) vorgesehen sind, die an Spannstellen (11) der Seitenwandteile (5) angreifen und diese halten,
**dass** das Dachteil (6) mittels dort an Spannstellen (13) angreifenden Dachteil-Stell- und Spanneinheiten (16) eines Dachteilträgers (4) gehalten und von oben her (Z-Richtung) in den Bereich oberhalb und zwischen den Dachseitenholmen (7) so weit zugeführt wird, dass zwischen den Dachholmen (7) und den Dachteil-Anschlussflanschen (12) jeweils ein Mess- und Richtspalt (31) im Bereich der dort auszubildenden Nahtfugen (17) ausgebildet wird, die mittels der Sensoren (14) geometrisch vermessen werden, wobei erfasste Messdaten als Istwerte einer Mess- und Regeleinrichtung zugeführt werden, in der Istwerte mit Kontursollwerten verglichen und Korrekturmaße ermittelt werden,
**dass** in Abhängigkeit von den Korrekturmaßen mit einem Regelalgorithmus Stellwerte für eine Bauteilkonturausrichtung und/oder gegenseitige Bauteilkonturanpassung im Bereich der Mess- und Richtspalte (31) erzeugt werden, die mittels der Stell- und Spanneinheiten (15, 16) umgesetzt werden,
**dass** nach Abschluss und Ausregelung der Ausrichtungen und Anpassungen das Dachteil (6) mit den Dachteil-Anschlussflanschen (12) zwischen die Dachseitenholme (7) zur Bildung der ausgerichteten Nahtfugen (17) zugeführt wird, und
**dass** anschließend im Bereich der Nahtfugen (17) die Verbindungsnaht (30) angebracht wird.

2. Verfahren nach Anspruch 1, **dadurch gekennzeichnet, dass** die Verbindungsnaht als Laserlötnaht (30) oder als Laserschweißnaht mit Zusatzwerkstoff hergestellt wird.

3. Verfahren nach Anspruch 1 oder 2, **dadurch gekennzeichnet, dass** nach Abschluss der Ausrichtungen und Anpassungen die Bauteile (5, 6) an der Nahtfuge (17) zur Anlage gebracht werden und die Verbindungsnaht (30) angebracht wird.

4. Verfahren nach einem der Ansprüche 1 bis 3, **dadurch gekennzeichnet, dass** die Stellrichtungen (20) der Seitenwand-Stell- und Spanneinheiten (15) für eine erste Bauteilkontur etwa achsparallel ausgerichtet sind und die Stellrichtungen (24) der Dachteil-Stell- und Spanneinrichtungen (16) für die andere zweite Bauteilkontur achsparallel gegenüber den ersten Stellrichtungen (20), jedoch um 90° versetzt liegen.

5. Verfahren nach einem der Ansprüche 1 bis 4, **dadurch gekennzeichnet, dass** die Seitwand-Stell- und Spanneinheiten (15) jeweils mit einer Stellrichtung in Fahrzeugquerrichtung (20) (Y-Richtung) an einem Dachseitenholm (7) zur Aufbringung eines geregelten Stellwegs angreifen und eine Ausrichtung und Anpassung durch Druck oder Zug durchführen,
dass am Laserlötstation-Aufbau (2) und/oder am Dachteilträger (4) die Dachteil-Stell- und Spanneinheiten (16) angeordnet sind, die jeweils mit einer Stellrichtung in der Vertikalrichtung (24) (Z-Richtung) zur Aufbringung eines geregelten Stellwegs angreifen und mit denen eine entsprechende Ausrichtung und Anpassung durch Druck oder Zug durchgeführt wird, und
dass von oben her jeweils mit einem robotergeführten Laserlötkopf (29) eine Verbindungsnaht als Laserlötnaht (30) angebracht wird.

6. Verfahren nach Anspruch 5, **dadurch gekennzeichnet, dass** jeweils im Bereich einer A-, B- und C-Säule (8, 9, 10) eine Seitenwand-Stell- und Spanneinheit (15) mit zugeordneter Dachteil-Stell- und Spanneinheit (16) und zugeordneter Kameraanordnung (14) angebracht ist.

7. Verfahren nach einem der Ansprüche 1 bis 6, **dadurch gekennzeichnet, dass** eine Steil- und Spanneinheit (15, 16) eine Schlittenanordnung mit einer ortsfest befestigbaren Schlittenführung und einem Kugelspindelantrieb (18, 22) sowie einem an der Schlittenführung verstellbar gehaltenen Schlitten (19, 23) mit wenigstens einer endseitigen Spannvorrichtung (21, 26) aufweist.

8. Verfahren nach Anspruch 7, **dadurch gekennzeichnet, dass** die Spannvorrichtung Zangenelemente und/oder Saugteller (26) und/oder an die jeweilige Bauteilkontur angepasste Anlageflächen (25) aufweist.

## Claims

1. Method for joining a first vehicle body part and a second vehicle body part with a joining seam on a seam (17), with a measuring and regulating device for determining component specific data, and the measuring technical determination of the geometry of the body part contours is carried out by optical or laser or tactile measuring sensors in the form of cameras (14) or sensors, and the first vehicle body part is established by two side wall parts (5) of a raw body which are distanced from one another and each include a lateral roof spar (7), and the second body part is respectively a roof section joining flange (12) of a surface roof part (6),
**characterised in that**
the side wall parts (5) are delivered to a laser soldering station (1) and in correct position locked on a side wall support (3) in a laser soldering station structure (2), and provision is made for side wall setup and clamping units (15) transposed relative to each other on the side wall support (3) which engage and hold on to clamping points (11) of the side wall parts (5);
the roof part (6) is held by means of roof part setup and clamping units (16) of a roof part support (4) which engage the clamping points (13) thereat, and from the top delivered (Z direction) into the area above and between the roof side spars (7) to such an extent that between the roof parts (7) and the roof part joining flanges (12) is established a respective measuring and alignment gap (31) in the area where seam joints (17) are to be produced, which are geometrically measured by means of the sensors (14), and determined measuring data are delivered as actual values to a measuring and regulating device where actual values are compared to contour nominal values and correcting measures are determined;
in dependence of the correcting measures are produced by means of a regulating algorithm setting values for a component contour alignment and/or alignment of part contours in the area of the measuring and alignment gap (31), which are converted by means of setup and clamping units (15, 16);
on completion and regulation of alignments and matching, the roof part (6) is delivered with roof part joining flanges (12) between the roof side spars (7) so as to form the aligned seam joints (17); and
thereafter the joining seam (30) is placed in the area of the seam joints (17).

2. Method according to Claim 1, **characterised in that** the joining seam is produced as a laser soldering seam (30) or as a laser welding seam with supplementary material.

3. Method according to Claim 1 or 2, **characterised in that** after completion of alignments and matching, the assembly parts (5, 6) are abutted against the seam joint (17), and the joining seam (30) is applied.

4. Method according to one of Claims 1 to 3, **characterised in that** the setup directions (20) of the side wall setup and clamping units (15) for a first assembly component contour are aligned approximately axis-parallel, and the setup directions (24) of the roof part setup and clamping devices (16) for the other second assembly component contour are positioned axis-parallel relative to the first setup directions (20), though offset by 90°.

5. Method according to one of Claims 1 to 4,
**characterised in that**
the side wall setup and clamping units (15) respectively engage, with a setup direction in the vehicle's transverse direction (20)(Y direction), a roof side spar (7) for establishing a regulated setup path and perform an alignment and matching by pressure or tension;
on the laser soldering station structure (2) and/or on the roof part support (4) are placed the roof part setup and clamping units (16) which respectively engage with a setting direction in the vertical direction (24)(Z direction) in order to apply a regulated setup path and by means of which a corresponding orientation and matching is carried out by pressure or tension; and
from the top is applied by means of a respective robot-guided laser soldering head (29) a joining wire as laser soldering seam (30).

6. Method according to Claim 5, **characterised in that** in the respective area of an A-, B- or C-column (8, 9, 10) is established a sidewall setup and clamping unit (15) with associated roof part setup and clamping unit (16) and associated camera arrangement (14).

7. Method according to one of Claims 1 to 6, **characterised in that** a setup and clamping unit (15, 16) comprises a carriage arrangement with a locally fixed carriage guide and a ball spindle drive (18, 22) as well as a carriage (19, 23) which is adjustably held on the carriage guide with at least one endsided clamping device (21, 26).

8. Method according to Claim 7, **characterised in that** the clamping device comprises claw elements and/or suction plates (26) and/or abutment surfaces (25) which are matched to a respective component contour.

## Revendications

1. Procédé de liaison d'une première pièce de carrosserie et d'une deuxième pièce de carrosserie avec une soudure de liaison sur une jointure de soudure (17), avec un dispositif de réglage et de mesure pour la saisie de données spécifiques à une pièce, la saisie par technique de mesure de la géométrie des contours de la pièce s'effectuant par des capteurs de mesure optiques ou laser ou tactiles du type de caméras (14) ou de capteurs, la première pièce de carrosserie étant formée par deux pièces de paroi latérale (5) d'une carrosserie brute distantes l'une de l'autre et présentant chacune un longeron latéral de toit (7) et la deuxième pièce de carrosserie étant une bride de raccord de pièce de toit (12) respective d'une pièce de toit plane (6),
**caractérisé**
**en ce que**, les pièces de paroi latérale (5) sont amenées à une station de brasage au laser (1) et verrouillées correctement en place sur un support de paroi latérale (3) dans un montage de station de brasage au laser (2), des unités de réglage et de tension de paroi latérale (15) déportées l'une par rapport à l'autre étant prévues sur le support de paroi latérale (3), qui s'engagent sur des zones de tension (11) des pièces de paroi latérale (5) et maintiennent celles-ci,
**en ce que** la pièce de toit (6) est maintenue au moyen d'unités de réglage et de tension de pièce de toit (16) d'un support de pièce de toit (4) s'y engageant sur des zones de tension (13) et est amenée par le haut (sens Z) dans la zone au-dessus et entre les longerons latéraux de toit (7) de sorte qu'entre les longerons latéraux de toit (7) et les brides de raccord de pièce de toit (12), une fente de mesurage et de repère (31) respective est formée dans la zone des jointures de soudure (17) à former qui sont géométriquement mesurées au moyen des capteurs (14), les données de mesure saisies étant fournies comme valeurs réelles d'un dispositif de mesure et de réglage, dans lequel des valeurs réelles sont comparées à des valeurs de consigne de contour et des mesures de correction sont calculées,
**en ce qu'**en fonction des mesures de correction avec un algorithme de réglage, des valeurs de réglage sont produites pour un ajustage de contour de pièce et/ou une adaptation réciproque de contour de pièce au niveau des fentes de mesure et de repère (31) qui peuvent être modifiées au moyen des unités de réglage et de tension (15, 16),
**en ce qu'**après avoir terminé et réglé les ajustages et les adaptations, la pièce de toit (6) est amenée avec les brides de raccord de pièce de toit (12) entre les longerons latéraux de toit (7) pour former les jointures de soudure (17) ajustées,
**en ce qu'**enfin au niveau des jointures de soudure (17), la soudure de liaison (30) est appliquée.

2. Procédé selon la revendication 1,
**caractérisé en ce que** la soudure de liaison est réalisée par brasure au laser (30) ou par soudure au laser avec de la matière supplémentaire.

3. Procédé selon la revendication 1 ou 2,
**caractérisé en ce qu'**après avoir terminé les ajustages et les adaptations, les pièces (5,6) sont positionnées sur la jointure de soudure (17) et que la soudure de liaison (30) est appliquée.

4. Procédé selon l'une des revendications 1 à 3,
**caractérisé en ce que** les sens de réglage (20) des unités de réglage et de tension de paroi latérale (15) sont ajustés sensiblement parallèle à l'axe pour un premier contour de pièce et les sens de réglage (24) des dispositifs de réglage et de tension de pièce de toit (16) pour le deuxième autre contour de pièce, sont cependant déplacés de 90°, parallèle à l'axe par rapport aux premiers sens de réglage (20).

5. Procédé selon l'une des revendications 1 à 4,
**caractérisé en ce que** les unités de réglage et de tension de paroi latérale (15) s'engagent chacune avec un sens de réglage dans le sens transversal du véhicule (20) (sens Y) sur un longeron latéral de toit (7) pour mettre en place un chemin de réglage réglé et réaliser un ajustage et une adaptation par pression ou tension,
**en ce que** sur le montage de station de brasage au laser (2) et/ou sur le support de pièce de toit (4), les unités de réglage et de tension de pièce de toit (16) sont placées, qui s'engagent chacune avec un sens de réglage dans le sens vertical (24) (sens Z) pour mettre en place un chemin de réglage réglé et avec ceux-ci, réaliser un ajustage et une adaptation par pression ou tension, et
**en ce qu'**une soudure de liaison ou sous forme de brasage au laser (30) est appliquée par le haut avec une tête de brasage au laser (29) respective conduite par un robot.

6. Procédé selon la revendication 5,
**caractérisé en ce que** respectivement au niveau d'une colonne A, B et C (8, 9, 10), une unité de réglage et de tension de paroi latérale (15) est positionnée avec une unité de réglage et de tension de pièce de toit (16) associée et un agencement de caméra (14) attribué.

7. Procédé selon l'une des revendications 1 à 6,
**caractérisé en ce qu'**une unité de réglage et de tension (15, 16) présente un agencement de glissières avec un guidage de glissières pouvant être fixé stationnaire et un entraînement de broche à rotule (18, 22) ainsi que des glissières maintenues de manière réglable (19, 23) sur le guidage de glissières avec au moins un dispositif de tension d'extrémité (21, 26).

8. Procédé selon la revendication 7,
**caractérisé en ce que** le dispositif de tension présente des éléments de pince et/ou des disques d'aspiration (26) et/ou des surfaces d'applique (25) adaptées à chaque contour de pièce.
